# EUROPEAN PATENT SPECIFICATION

(11) **EP 4 329 941 B1**
(45) Date of publication and mention of the grant of the patent: **10.07.2024**
(21) Application number: 22757659.2
(22) Date of filing: 03.08.2022
(51) Int. Cl.: B04C 11/00, B04C 5/14, G01H 9/00

(54) **HYDROCYCLONE OPTIMISATION**
HYDROZYKLONOPTIMIERUNG
OPTIMISATION D'HYDROCYCLONE

(30) Priority: 05.08.2021 GB 202111307
(43) Date of publication of application: 06.03.2024
(73) Proprietor: Vulco S.A., San Bernardo, Santiago de Chile 8081682 (CL)
(72) Inventor: PUTZ, Eduardo, Santiago de Chile 8081682 (CL); LOPEZ, Javier, Santiago de Chile 8081682 (CL); VEGA, Mauricio, Santiago de Chile 8081682 (CL); HERNANDEZ, Carlos, Santiago de Chile 8081682 (CL)
(74) Representative: MacLeod, Roderick William
(86) International application number: PCT/IB2022/057216
(87) International publication number: WO 2023/012697

(56) References cited:
- WO-A1-2017/197451
- WO-A1-2019/173874

## Description

### Technical Field

The present invention generally relates to optimisation of the performance of a hydrocyclone, or a cluster of hydrocyclones.

### Background

Hydrocyclones are commonly used for separating suspended matter carried in a liquid into multiple discharge streams or "phases" of different density. In the mining industry, for example, hydrocyclones may be used to separate particulates that are located in a slurry into a heavier ("coarser") solid phase and a lighter ("finer") solid phase, for classification purposes. A slurry is a two phase mixture (a liquid with solid particles suspended or otherwise located therein).

During normal, stable operation of a hydrocyclone, slurry enters through an upper inlet of a hydrocyclone separation chamber in the form of an inverted cone, with the heavier solid phase being discharged through a lower outlet ("underflow") and the lighter solid phase being discharged through an upper outlet ("overflow"). However, the internal stability of a hydrocyclone (that is, the stability of the fluids within the hydrocyclone) during such an operation can be readily disrupted, resulting in an ineffective separation process and whereby either an excess of fine particulates exit through the lower outlet or courser particulates exit through the upper outlet.

There are four known operational states of a cyclone: splash, semi-roping, transition, and roping. The splash state is inefficient, but it has the advantage that it is unlikely to lead to roping, which is one form of unstable operation. In roping, the rate of solids being discharged through the lower outlet increases to a point where the flow is impaired. If corrective measures are not timely adopted, the accumulation of solids through the outlet will build up in the separation chamber, the internal air core will collapse and the lower outlet will discharge a rope-shaped flow of coarse solids. Roping may also result in the undesired effect of some or a substantial part of the heavier phase being discharged through the upper outlet. A number of different operational conditions can cause roping, some of which include changes in the composition and viscosity of the slurry and increases in slurry feed speed.

The semi-roping state is characterised by improved hydrocyclone efficiency and increased density in the underflow. The semi-roping state is visually distinct from both splash mode and roping mode in that the slurry in the underflow discharge of the hydrocyclone has an increased solids percentage, and the splay angle (which is the internal cone angle of the discharge) of the slurry discharge is reduced (in other words, the cone shaped discharge is narrower for the semi-roping state than for the splash state). The transition state is that state in which the hydrocyclone moves momentarily into, and then back out of, the roping state.

To prevent roping, many mine operators typically select a slurry flow rate (or pressure) such that there is a significant margin before the hydrocyclones would experience roping. This avoids the losses that result from having to shut down a hydrocyclone that has entered roping; however, a hydrocyclone operates most efficiently when it is almost at the roping condition. This problem is exacerbated where hydrocyclones are provided in a cluster arrangement because the margin of safety is typically determined based on the hydrocyclone that is closest to roping, so other hydrocyclones in the cluster may be operating a long way from roping, and therefore highly inefficiently.

Prior art approaches, such as that disclosed in WO2016/051275 are directed to detecting the onset of roping and preventing it occurring by changing the operational state back to the splash state. WO 2017/197451 discloses a hydrocyclone including a probe for detecting a flow condition of the underflow and comprises an elongate body and a vibration sensor to detect vibration of the elongate body. WO 2019/173874 discloses a hydrocyclone monitoring system comprising a conduit connected to a first outlet and having a channel through which a stream is ejected from the separation chamber. A sensor assembly detects characteristics of the flow of the stream in the channel.

There is a need for new or improved systems and/or methods of controlling the operation of a hydrocyclone so that it operates more efficiently.

The reference in this specification to any prior publication (or information derived from the prior publication), or to any matter which is known, is not, and should not be taken as an acknowledgment or admission or any form of suggestion that the prior publication (or information derived from the prior publication) or known matter forms part of the common general knowledge in the field of endeavour to which this specification relates.

### Summary

According to a first aspect there is provided a method of controlling the operation of a hydrocyclone to maintain the hydrocyclone in a semi-roping or transition operational state as it separates a pumped fluid into an overflow stream and an underflow stream, the method comprising: measuring vibrations of the hydrocyclone at a selected frequency within a predetermined frequency range; comparing a characteristic of the measured vibrations at the selected frequency with a plurality of values representing transitions to a high efficiency state and a roping state, respectively, of the hydrocyclone to identify a current operational state of the hydrocyclone; generating an adjustment setting to change the identified current operational state to the high efficiency state, where the adjustment setting increases or decreases an operational parameter, such as a pumped fluid parameter.

The high efficiency state may comprise both the semi-roping state and the transition state. A low efficiency state may comprise both the splash state and the roping state. The high efficiency state may be represented by a first value (indicating transitions to a semi-roping state) and a second value (indicating transitions to a transition state). The second value may be numerically larger than the first value.

The plurality of values representing transitions may represent transitions (i) to a semi-roping state, (ii) from the semi-roping state to a transition state, and (iii) from the transition state to a roping state.

The pumped fluid may comprise slurry.

The method may comprise detecting when a characteristic of the measured vibrations at the selected frequency is near to a value representing a transition to a roping state of the hydrocyclone and generating an adjustment value so that the characteristic is still within the semi-roping state but not as near the transition to the transition state as previously measured.

The selected frequency may vary by a small amount within the desired frequency range.

The desired frequency range may comprise 1 to 50 Hz; 10 to 40Hz, 20 to 40Hz, or the like. In some embodiments a frequency range of approximately 30 to 40 Hz may be advantageous.

The values may be determined by implementing a calibration process on the hydrocyclone. The calibration process may involve forcing the operation of the hydrocyclone between the different states (for example, by changing the pump speed or pressure of the slurry) or modes of operation. For example, the hydrocyclone may be changed from a splash mode to a semi-roping mode, then to a transition mode, and then to a roping mode. The transition mode may be a mode in which the hydrocyclone switches between semi-roping and roping in an unstable manner. For each of these modes, the maximum amplitude may be recorded, and the frequency at which the maximum amplitude occurs. The maximum amplitude will typically occur for the roping state, so this amplitude may be set at the maximum level, and the other amplitudes may be calibrated relative to the maximum amplitude in the roping state. For each mode, the maximum measured amplitude for that mode may be used as the changeover point indicating that the operating mode is expected to change to the next mode at that amplitude.

Optionally, vibrations are measured from an air core of a hydrocyclone. The vibrations may be measured indirectly, for example, using a sensor coupled to a membrane mounted on an overflow outlet. The membrane vibrations may be related to the air core frequency. The membrane may be mounted on an overflow pipe from an overflow outlet of the hydrocyclone. Alternatively, where an air core booster is fitted at the overflow outlet of the hydrocyclone, the membrane may be mounted on an upper surface (such as a top surface) of the air core booster.

The characteristic of the measured vibrations preferably comprises an amplitude of the vibrations. The amplitude may be a direct measurement or a transformation of the amplitude measurement. Alternatively, but less preferred, the characteristic may comprise a rate of change of the amplitude.

The plurality of values may comprise two values: a low value and a high value; wherein any characteristic below the low value represents a first mode of operation, any characteristic at or above the low value but below the high value represents a second mode of operation, and any characteristic at or above the high value represents a third mode of operation. The first mode may correspond to a splash mode of operation, which is inefficient; the second mode may correspond to a semi-roping mode of operation, which is optimum efficiency, the third mode may correspond to a roping mode of operation which is highly inefficient.

Alternatively, the plurality of values may comprise three values: a low value, a medium value, and a high value; wherein any characteristic below the low value represents a first mode of operation, any characteristic at or above the low value but below the medium value represents a second mode of operation, any characteristic at or above the medium value but below the high value represents a third mode of operation and any characteristic at or above the high value represents a fourth mode of operation. The first mode may correspond to a splash mode of operation, which is inefficient; the second mode may correspond to a semi-roping mode of operation, which is optimum efficiency, the third mode may correspond to a transition mode, which may lead to the fourth mode of operation, which is the roping mode.

Optionally, the plurality of values may comprise more than three values.

The method may comprise the further step of transmitting to a remote display an indication of which mode of operation the hydrocyclone is currently operating in.

The adjustment setting may comprise a speed adjustment for transmitting to a variable frequency drive (VFD) that controls a motor powering a pump (by rotating the pump shaft at a speed determined by the VFD) that pumps the pumped fluid. If the adjustment setting is negative then the VFD reduces the speed based on the value (i.e. the magnitude) of the adjustment setting. If the adjustment setting is positive then the VFD increases the speed based on the value (i.e. the magnitude) of the adjustment setting. If the adjustment setting is zero then the VFD does not change the speed. The speed adjustment may comprise a reference speed offset that is delivered to the VFD.

By adjusting the speed of the pump, the pressure of the fluid is changed (faster slurry flow rate produces a higher pressure in a hydrocyclone), which quickly changes the geometry of the air core inside the hydrocyclone. This enables the hydrocyclone to be operated in a semi-roping or even transitional mode because if roping does occur it can be quickly detected and reversed by reducing the pumping speed. Detection of roping may be implemented by a comparator circuit coupled to the vibration sensor, so that if an amplitude at the selected frequency exceeds a threshold at which an undesired change of operating state or mode occurs, for example, a changeover from semi-roping to transition mode, then the comparator circuit provides an output that is used as, or to generate, the adjustment setting. The comparator circuit may include a processor that implements a comparison or weighting algorithm.

Alternatively, instead of, or in addition to, changing the pump speed, one or more of the following may be changed: (i) the fluid viscosity (for example, by adding more water to reduce the viscosity, or by adding additional particles to increase the viscosity), (ii) a vortex finder diameter at the overflow, (iii) an apex diameter at the underflow, or (iv) the state of an isolation valve (open or closed) on an inlet to a hydrocyclone.

The method may comprise the further step of providing the adjustment setting to a device upstream of the hydrocyclone.

Optionally, the adjustment setting includes an indication of an amount to increase or decrease a pumped fluid parameter. This amount may be indicated by a magnitude of the adjustment setting.

Optionally the method further comprises: detecting when the characteristic meets the highest value of the plurality of values and implementing an intervention process in response thereto.

The intervention process may comprise adjusting the pumped fluid parameter significantly to improve the probability of the characteristic meeting a lower or the lowest, value.

The intervention process may further comprise stopping the pumped fluid if adjusting the pumped fluid parameter does not cause the characteristic to meet the lower or lowest value.

The maximum amplitude for each operating mode may occur at a slightly different frequency to the maximum amplitude for the other operating modes, but the maximum amplitudes would typically be within the predetermined frequency range. The amplitude may be measured at the same frequency for all operating modes, or a slightly different frequency for some or all of the operating modes.

According to a second aspect there is provided a method of controlling the operation of a hydrocyclone cluster comprising a plurality of hydrocyclones fed by a fluid distributor to maintain each hydrocyclone in a semi-roping or transition operational state, the method comprising: measuring vibrations from each of a plurality of hydrocyclones at a selected frequency in a predetermined frequency range; for each hydrocyclone, comparing a characteristic of the measured vibrations at the selected frequency with a plurality of values representing transitions to a semi-roping state, a transition state and a roping state of the hydrocyclones to identify a current operational state of each of the hydrocyclones; generating an adjustment setting for each hydrocyclone to change the identified current operational state to, or maintain each hydrocyclone in, either the semi-roping or transition desired operational state; and using a weighting algorithm to generate a master adjustment setting based on the individual adjustment settings, where the master adjustment setting increases or decreases a pumped fluid parameter.

The weighting algorithm may generate a master adjustment setting that causes most hydrocyclones to operate in an optimum range where the measured characteristic is between two values.

The method may comprise the further step of identifying a hydrocyclone that may generate vibrations having a characteristic above the higher value in response to the master adjustment setting being implemented, and closing an isolation valve associated with that hydrocyclone.

The method may further comprise identifying a hydrocyclone that may generate vibrations having a characteristic below the higher value in response to the master adjustment setting being implemented, and opening an isolation valve associated with that hydrocyclone.

By increasing the slurry flow rate, a higher pressure is created in a manifold supplying a plurality of hydrocyclones, and this transfers into a higher pressure in each hydrocyclone.

According to a third aspect there is provided a hydrocyclone for separating pumped fluid into a plurality of streams, the hydrocyclone comprising: an inlet for receiving the pumped fluid; a separation chamber in fluid communication with the inlet and delivering a first fluid stream to an overflow, and a second stream to an underflow; and a vibration sensor mounted on the hydrocyclone; and a controller operable to (i) measure vibrations of the hydrocyclone at a selected frequency within a predetermined frequency range; (ii) compare a characteristic of the measured vibrations at the selected frequency with a plurality of values representing transitions to a semi-roping state, a transition state and a roping state of the hydrocyclone to identify a current operational state of the hydrocyclone; (iii) generate an adjustment setting to change the identified current operational state to, or maintain each hydrocyclone in, either the semi-roping or transition state, where the adjustment setting increases or decreases an operational parameter, for example, a pumped fluid parameter.

In some embodiments the adjustment setting may be used to move the characteristic closer to an upper value indicative of a transition to an undesired state. This may be used when the hydrocyclone is to be used as close as possible to the roping condition, particularly because the hydrocyclone is most efficient when it is operating close to the roping condition.

The hydrocyclone may include an overflow pipe coupled thereto. The overflow pipe may be coupled to a vortex finder, or to an air core booster coupled to the vortex finder.

According to a fourth aspect there is provided a hydrocyclone system comprising a plurality of hydrocyclones according to the third aspect, where the plurality of adjustment settings created by the hydrocyclones are fed into a weighting algorithm to create a master adjustment setting based on the individual adjustment settings.

The hydrocyclone system may further comprise: a density sensor in the overflow of each hydrocyclone or in a common overflow path fed into by each hydrocyclone overflow; and a density sensor in the underflow (either in a common underflow sump or in each individual hydrocyclone underflow). Measurements from these density sensors may be fed into the weighting algorithm. These measurement may be used to populate a mathematical model of the hydrocyclone and/or a cluster of hydrocyclones to represent mass separation and metallurgical characteristics of the hydrocyclone and/or cluster, such as separation efficiency, the P₅₀ cut point the mineral mass in the overflow and the underflow, and such like. These measurement may be used to calculate a mathematical mass balance model in real time for the mill circuit in which the hydrocyclone cluster and feed pump are installed and operated. The mathematical mass balance model may be implemented as an algorithm that provides an output indicating the operating point of the pump and the cyclone cluster, in addition to the flow input parameters for the mill circuit (solids weight, flow rate, density, and the like) and flow output parameters from the mill circuit (solids weight, flow rate, density, and the like). This mathematical mass balance model can present this information (for example, on a user dashboard, on a screen panel on the equipment, or on an app on a mobile device carried by a user) as points plotted on a pump dynamic head and flow rate curve, and as points plotted on a hydrocyclone pressure and flow rate curve. A control algorithm can be used to adjust the parameters in response to the mathematical model to ensure that the pump and hydrocyclone clusters are operated in a predefined safe operating zone.

The hydrocyclone system may further comprise a flow meter. Measurements from the flow meter may be fed into the weighting algorithm.

The weighting algorithm may be implemented using deep learning, a Bayesian network, or any other convenient method.

These and other aspects will be apparent from the following specific description, given by way of example only, with reference to the accompanying drawings, in which:
Fig. 1 is a schematic view of part of a hydrocyclone system according to a first embodiment of the present invention;
Fig. 2 is a simplified cross section view of part of the hydrocyclone system of Fig. 1, showing additional features (an overflow pipe and a sensing system) in more detail;
Fig. 3 is a flowchart illustrating steps performed in calibrating the hydrocyclone system of Fig. 1;
Fig. 4 is a flowchart illustrating steps performed in operating the hydrocyclone system of Fig. 1 to maintain the hydrocyclone system in a desired mode;
Fig. 5 is a schematic plan view of a hydrocyclone system comprising a cluster of hydrocyclones of the type shown in the hydrocyclone system of Fig. 1, according to a second embodiment of the present invention;
Fig. 6 is a schematic view of part of a hydrocyclone system according to a third embodiment of the present invention;
Fig. 7 is a simplified cross section view of part of the hydrocyclone system of Fig. 6, showing features thereof in more detail;
Fig. 8 is an example of a pump curve illustrating a safe operating zone in which the hydrocyclone system maintains the pump; and
Fig. 9 is an example of a hydrocyclone curve illustrating a safe operating zone in which the hydrocyclone system maintains the hydrocyclone.

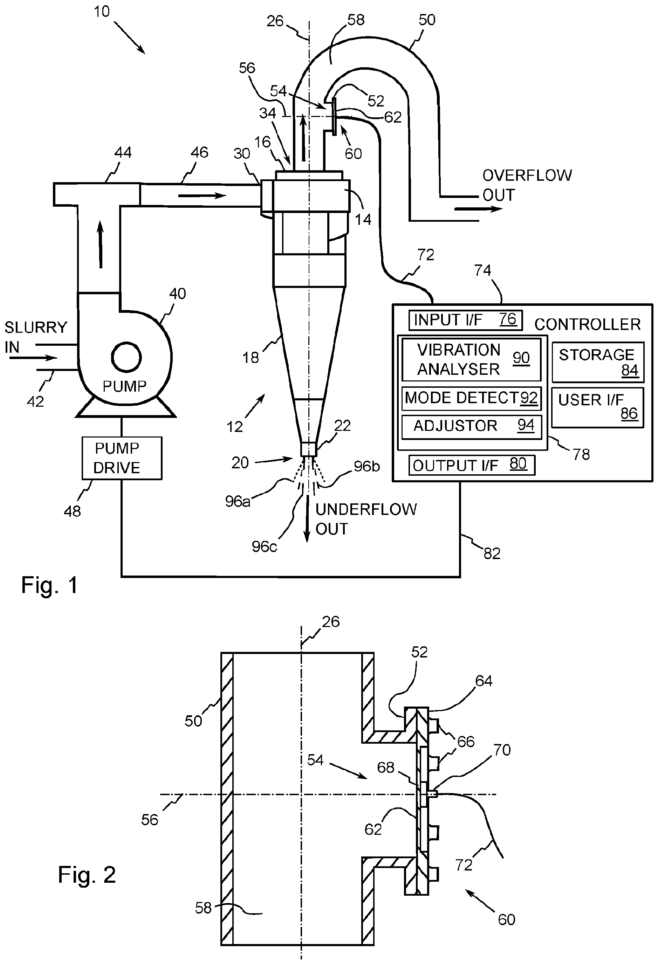

Reference is now made to the drawings, and particularly to Fig. 1, which is a schematic view of part of a hydrocyclone system 10 according to a first embodiment of the present invention.

The hydrocyclone system 10 comprises a plurality of conventional hydrocyclones (only one hydrocyclone 12 is illustrated in Fig. 1), each having a generally cylindrical upper chamber 14 at an upper end thereof, an overflow cap 16 (also referred to as a vortex finder) mounted on an upper surface of the cylindrical chamber 14 and extending therein, and a generally frusto-conical shaped separation chamber 18 extending from a lower surface of the cylindrical chamber 14 to an underflow outlet 20 at which a spigot 22 is mounted.

The upper chamber 14, vortex finder 16, separation chamber 18, and spigot 22, are mounted generally coaxially such that they define a longitudinal axis 26, also referred to as a central axis or a fluid transport axis.

A feed inlet 30 is provided generally tangential to the longitudinal axis 26 and extending from the cylindrical chamber 14. An overflow outlet 34 comprises an aperture defined by the vortex finder 16 at an upper end of the cylindrical chamber 14.

The feed inlet 30 is configured to allow slurry (liquid containing suspended matter) to be pumped therethrough and into the separation chamber 18 to create one or more vortices therein and an air core to effect separation of the slurry into large particles reporting to the underflow outlet 20 and small particles reporting to the overflow outlet 34.

A centrifugal pump 40 is used to pump the slurry received on an input hose (or pipe) 42 into a distributor 44 that separates the slurry into a plurality of different hoses 46 (only one is illustrated in Fig. 1), each distributor hose 46 feeding a hydrocyclone feed inlet, such as feed inlet 30. The centrifugal pump 40 is driven by a motor (not shown for clarity) controlled by a conventional variable frequency drive (VFD) controller 48.

In this embodiment, an overflow pipe 50 leads from the overflow outlet 34 to a tank (not shown) for accumulating fine particulate slurry for use in ore extraction (for example, via flotation). However, in other embodiments, the overflow pipe 50 may lead to another desired processing stage.

Reference will now also be made to Fig. 2, which is a simplified cross section view of part of the overflow pipe 50, showing additional features in more detail.

The overflow pipe 50 defines a flanged protrusion 52 relatively close to an upper portion of the vortex finder 16 defining an opening 54 along a lateral axis 56 generally perpendicular to the longitudinal axis 26. The opening 54 is in fluid communication with the internal passageway 58 of the overflow pipe 50.

A sensor assembly 60 is mounted to the flanged protrusion 52 and comprises a membrane 62 coupled to the flanged protrusion 52 by an annular mount 64 (in the form of a metal ring in this embodiment) and bolts 66 extending therethrough and into the flanged protrusion 52. The annular mount 64 and membrane 52 combination seals the opening 54 (and thereby prevents fluid egress therefrom). The membrane 62 defines a generally central mounting zone 68 to which a vibration sensor 70 may be coupled. Various configurations of sensor assembly 60 may be used. In this embodiment, the sensor assembly 60 is similar to those described in WO2019/173874, which is owned by the assignee of this application.

In this embodiment, the membrane 62 is in the form of an elastomer membrane. However, in other embodiments, the sensor assembly may use a non-elastomeric flexible sheet.

Mounting the membrane 62 outside the internal passageway 58 ensures that it does not impede or obstruct overflow material flowing therethrough; however, membrane 62 comes into contact with overflow material (as the overflow material flows up the internal passageway 58) and can therefore be used to measure directly, for example, a vibration of the overflow material (for example, a vibration or pulsation of the overflow material transverse to the main direction of flow of the overflow material through the internal passageway 58). It is believed that the vibration of the overflow material detected by the membrane 62 is directly related to the vibration of the air core in the separation chamber 18 of the hydrocyclone 12.

In this embodiment, the vibration sensor 70 comprises an accelerometer. A suitable accelerometer for use in this embodiment is an Integrated Electronics Piezo-Electric (IEPE) sensor, such as those available from PCB of 3425 Walden Avenue, Depew, NY 14043, USA. Alternative accelerometers, such as wireless accelerometers, may be used instead of, or in addition to, a wired accelerometer. The vibration sensor 70 couples to the mounting zone 68, for example, using complementary formations on a sensor holder and the mounting zone 68, such as a bayonet fitting, or a screw thread fitting.

A vibration sensor cable 72 provides an electrical connection between the vibration sensor 70 and a cyclone controller 74.

In this embodiment the cyclone controller 74 is based on C6015 (communications gateway) and C6017 ultra-compact industrial PC, available from Beckhoff Automation GmbH & Co. KG, Huelshorstweg 20, 33415 Verl, Germany ("Beckhoff"). These devices are used as a controller and field gateway, and include accelerometer input modules, such as the EL3632 2-channel analogue input terminal for condition monitoring, also available from Beckhoff. The cyclone controller 74 may execute TF3600 TC3 condition monitoring software available from Beckhoff.

The cyclone controller 74 comprises an input interface 76 for coupling to vibration sensor cable 72, one or more processors 78 for implementing various analytical functions, an output interface 80 for coupling to the VFD controller 48 via a pump control cable 82, non-volatile storage 84, and a user interface 86. The user interface 86 may comprise an LCD screen, LED lights, or any other convenient visual or audio interface.

The input interface 76 comprises a plurality of EL3632 accelerometer input modules. Each vibration sensor 70 has a unique identification, and the unique identification is mapped to the particular hydrocyclone 12 (only one is illustrated in Fig. 1, but a cluster of hydrocyclones is typically provided, each hydrocyclone 12 having a dedicated vibration sensor 70). This ensures that the cyclone controller 74 can indicate which hydrocyclone 12 is being analysed.

The processor 78 is programmed to implement three main functions (illustrated by functional blocks in Fig. 1): a vibration analysis function 90, a mode detection function 92, and an adjustment function 94. These three functions may be performed by a configured instance of the TF3600 TC3 condition monitoring software. They may also be performed by a software implementation of a mathematical model of the operation of the hydrocyclone 12.

Hydrocyclones, such as hydrocyclone 12, can operate in multiple different modes. A first mode is referred to as splash (or splashing) mode. This mode is illustrated in Fig. 1 by broken lines 96a. In splash mode the slurry exiting the spigot 22 has a relatively wide splay angle. A second mode is referred to as semi-roping mode. This mode is illustrated in Fig. 1 by broken lines 96b. In semi-roping mode the slurry exiting the spigot 22 has a medium splay angle, narrower than splash mode. A third mode is referred to as roping mode. This mode is illustrated in Fig. 1 by broken lines 96c. In roping mode the slurry exiting the spigot 22 is a rope-shaped flow of coarse solids because the air core within the separation chamber 14 has collapsed (or is close to collapsing).

There is also a fourth mode of operation referred to as a transition mode. In the transition mode, the operation of the hydrocyclone 12 moves momentarily into, and then back out of, the roping mode. The transition mode is the most efficient operating mode for the hydrocyclone 12 in terms of sharpness of cut (the particle size separation between the heavier particles reporting to the underflow outlet 20 and the lighter particles reporting to the overflow outlet 34), but if roping mode is entered more than momentarily then no separation occurs and the hydrocyclone 12 may need to be shut down and restarted. This is very inefficient and expensive in terms of productivity loss.

In this embodiment, the operation of the hydrocyclone 12 can be controlled so that it is on the verge of the roping mode, without actually entering the roping mode more than momentarily. In other words, this embodiment allows the hydrocyclone 12 to be operated in transition mode or at the edge of semi-roping mode.

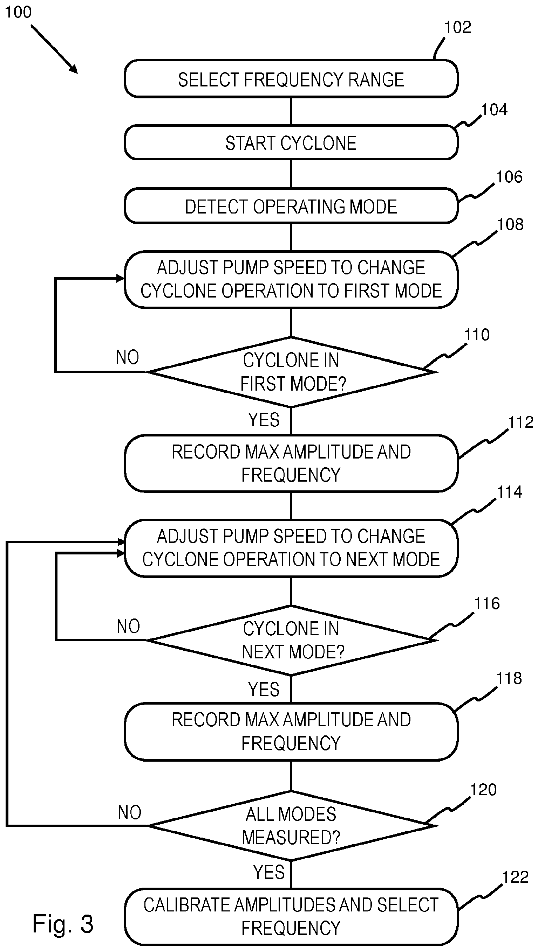

The operation of the hydrocyclone system 10, and particularly the cyclone controller 74, will now be described with reference to Fig. 3, which is a flowchart 100 illustrating steps performed in calibrating the controller 74 for use with the hydrocyclone 12. It is desirable to calibrate the controller 74 for use with each hydrocyclone 12 due to variations in slurries being separated at different locations, variations in the operation and wear characteristics of the hydrocyclone, and other factors. However, in some embodiments, a general calibration may be performed once, for example as a factory setting, and only updated if required.

Initially, a frequency range for measurements is selected (step 102) and programmed into the cyclone controller 74. In this embodiment, a frequency range between 10Hz and 50Hz is used, as the important vibrations from the air core are usually found in this range. However, in other embodiments different frequency ranges may be used, depending on the slurry type, density, pump speed, hydrocyclone hydrodynamics, or other factors. The cyclone controller 74 may be pre-programmed with this frequency range so that it only needs updated if a different frequency range is desired.

The hydrocyclone system 10 is then started (step 104). The operating mode of the hydrocyclone 12 is then detected (step 106). This may be performed manually by inspecting the underflow slurry exiting the spigot 22, or it may be performed using a mode detector (such as a sensor measuring the angle of spread of the underflow slurry from the spigot 22).

The cyclone controller 74 then adjusts the speed of the pump 40 to change the operating mode to (or maintain the operating mode in) the splash mode (step 108). This adjustment may be triggered by an operator or may be performed automatically.

The operating mode of the hydrocyclone 12 is then detected (step 110) to ensure that it is in splash mode. If not, then the pump 40 is further adjusted (back to step 108) and step 110 is repeated. If the hydrocyclone 12 is operating in splash mode, then amplitude measurements are recorded (using the vibration sensor 70) across the defined frequency range (10Hz to 50Hz in this embodiment) (step 112), including the maximum amplitude, and the frequency at which that maximum amplitude is measured.

The cyclone controller 74 then adjusts the speed of the pump 40 to change the operating mode to the next mode (in this embodiment, the semi-roping mode) (step 114). This adjustment may be triggered by an operator or may be performed automatically.

The operating mode of the hydrocyclone 12 is then detected (step 116) to ensure that it is in semi-roping mode. If not, then the pump 40 is further adjusted (back to step 114) and step 116 is repeated.

The pump speed adjustment and mode detection are performed iteratively (with relatively small adjustments to the pump speed) so that the point at which the mode changes is recorded. This is important as it will be used to create a lower amplitude level at which a transition into an operating mode occurs. For all modes other than the roping mode, the maximum amplitude occurs where the mode transitions into the next mode nearer to roping (e.g. splash to semi-roping, or semi-roping to transition, or transition to roping). This maximum amplitude will be used to calculate the upper amplitude level for that mode, as described in more detail below.

If the hydrocyclone 12 is operating in semi-roping mode, then amplitude measurements are recorded across the defined frequency range (10Hz to 50Hz in this embodiment) (step 118), including the maximum amplitude, and the frequency at which that maximum amplitude is measured.

Steps 114 to 118 are repeated for all modes until all modes have been measured (step 120). In this embodiment, four modes are used: splash; semi-roping; transition; and roping. For each of these modes, the cyclone controller 74 records the maximum amplitude at which the next mode is entered, and the maximum amplitude during operation in that mode.

The amplitudes and frequency for each mode are then selected to complete the calibration process (step 122). In this embodiment, all measurements during the normal operation of the hydrocyclone 12 (as opposed to operation of the hydrocyclone 12 during the calibration process 100) are taken at a single frequency within the frequency range. The single frequency selected is the frequency at which the maximum amplitude during roping mode is detected. Roping mode typically gives rise to the largest vibrations in the air core, so the largest vibration amplitudes occur during roping mode. In this embodiment, as an example, the selected frequency is 30Hz because the maximum amplitude during roping occurs at 30Hz (as an example). The measured vibration in roping mode is used to calibrate the other maximum amplitudes (i.e. the maximum amplitude of each of the other modes at that frequency are divided by the maximum amplitude in the roping mode at that frequency). This gives a maximum amplitude at roping of 1.0. The lower level of each mode is the amplitude at which the mode of the hydrocyclone 12 changes to that mode (which was also detected during the calibration process described above). An example of calibrated amplitudes for four operating modes is shown below in Table 1.

**Table 1 Example Upper and Lower Amplitudes for each Operating Mode**

| | Frequency (Hz) | Upper amplitude | Lower amplitude |
|---|---|---|---|
| Roping mode | 30 | 1.00 | 0.05 |
| Transition mode | 30 | 0.05 | 0.04 |
| Semi-roping mode | 30 | 0.04 | 0.03 |
| Splash mode | 30 | 0.03 | 0.00 |

These upper and lower amplitude values, together with the operating mode they correspond to, and the frequency at which the measurements were taken (collectively the "measurement parameters"), are stored in the non-volatile storage 84 in the cyclone controller 74.

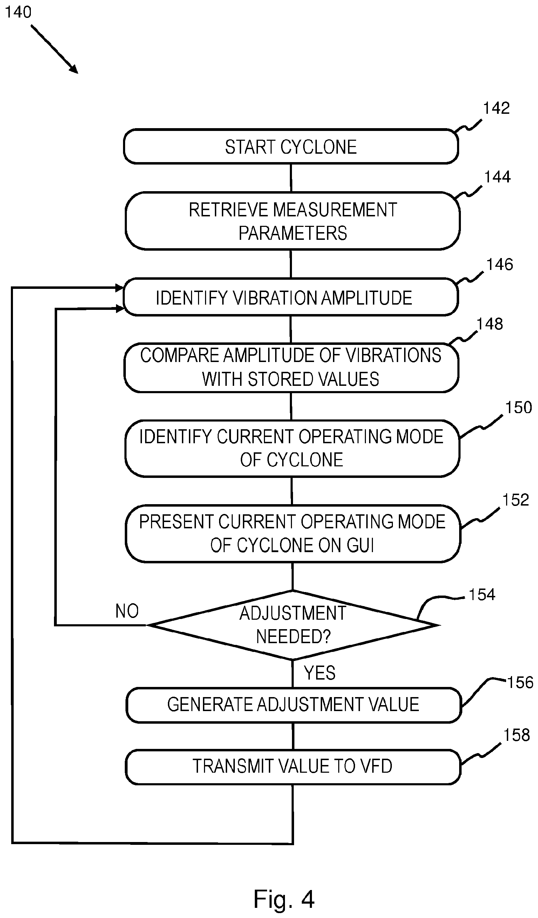

The operation of the hydrocyclone system 10 will now be described with reference to Fig. 4, which is a flowchart 140 illustrating steps performed in maintaining the hydrocyclone system in a desired mode (the upper region of the semi-roping mode in this embodiment) (referred to as the optimised operation process 140).

Initially, the hydrocyclone system 10 is started by pumping slurry through the hydrocyclone 12 (step 142).

The cyclone controller 74 then retrieves the measurement parameters from the non-volatile memory 84 (step 144), which includes the selected frequency (30Hz) at which measurements are to be taken. This step may occur before, during, or after the hydrocyclone system start-up step (step 142).

The cyclone controller 74 then receives the vibration measurements from the vibration sensor 70 and uses the vibration analysis function 90 to identify the vibration signal amplitude measured at this selected frequency (30Hz) (step 146).

The cyclone controller 74 then uses the mode detection function 92 to compare the vibration signal amplitude measured at the selected frequency (30Hz) with the upper and lower values retrieved from the non-volatile memory 84 (step 148). In this way, the cyclone controller 74 identifies the current operating mode of the hydrocyclone 12 (step 150) and presents this on the user interface 86 (step 152). Optionally, the cyclone controller 74 transmits this to a remote control centre, such as a distributed control system (DCS), where information about different types of equipment on the particular site is collated, processed and reviewed.

The cyclone controller 74 then uses the adjustor function 94 to ascertain if an adjustment needs to be made to move the hydrocyclone operating mode to the desired mode (step 154), and to generate an adjustment value, if required (step 156).

In this embodiment, the adjustor function 94 is implemented by a PID (a proportional-integral-derivative) controller.

If no adjustment is required then the process repeats from step 146 (identifying the measured vibration amplitudes).

The PID controller provides an adjustment setting based on the current measured amplitude and the desired amplitude. The bigger the difference between the current measured amplitude and the lower level amplitude of the semi-roping mode, the larger the adjustment setting. To move the operating mode of the hydrocyclone 12 from splash mode to semi-roping mode, the pump speed is increased; whereas, if roping mode is entered, the pump speed is decreased to move the operating mode to transition mode or semi-roping mode. Once the adjustment setting has been ascertained, it is then transmitted to the VFD controller 48 as a reference speed offset via the pump control cable 82. The VFD controller 48 then adjusts the pump speed accordingly.

This adjustment process (steps 146 through 158) is repeated continually, which has two advantages. Firstly, it allows the operating mode to be moved iteratively towards the desired mode without having to over-compensate by using too large an adjustment. Secondly, it enables any change of operating mode into transition mode or roping mode to be detected and corrected very quickly. This allows the hydrocyclone system 10 to be operated close to transition or roping mode, without the risk of being in roping mode for so long that the air core collapses.

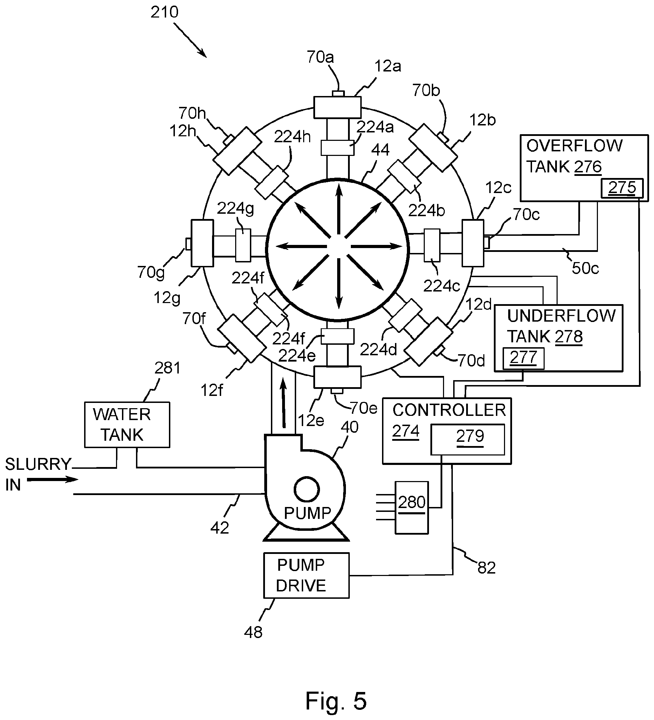

Reference is now made to Fig. 5, which is a schematic plan view of a hydrocyclone system 210 comprising a cluster of eight hydrocyclones 12a,b,c ...h, each similar to hydrocyclone 12. Each hydrocyclone 12 is disposed at an angle so that the spigots 22 are all in close proximity disposed in a ring formation and the overflow outlets 34 are relatively further apart.

Each hydrocyclone 12a,b,c ... h has an isolation valve 224 on its distributor hose 46 so that each hydrocyclone 12a,b,c ...h can be selectively turned on or off, as desired. This may be used to control the overall pressure in the distributor 44, or the pressure in each of the hydrocyclones 12a,b,c ... h.

The hydrocyclone system 210 also comprises an enhanced cyclone controller 274 that receives inputs from the eight vibrational sensors 70 (one on each hydrocyclone 12a,b,c ...h). The enhanced cyclone controller 274 also receives inputs (not shown) from a density sensor 275 (in the form of an ultrasonic sensor in this embodiment) located in an overflow tank 276 fed from the overflow pipes 50 of each of the hydrocyclones 12a,b,c ... h (although only one overflow pipe 50c is shown in Fig. 5 for clarity), and from a density sensor 277 (in the form of an ultrasonic sensor in this embodiment) located in an underflow tank 278 fed from a sump (not shown) into which the underflow from each spigot 22 is collected.

The overflow tank 276 has an outlet pipe (not shown) that allows fluid from the overflow tank 276 to be transported to other stages of processing, such as further separation stages, or flotation stages.

The enhanced cyclone controller 274 may also receive inputs from other sensors (such as pressure sensors, flow rate sensors, and the like) distributed throughout the hydrocyclone system 210 and mounted on or in different parts thereof.

The enhanced cyclone controller 274 includes an additional processing module 279 for receiving signals from the various sensors that are included in the hydrocyclone system 210, and for controlling equipment in the hydrocyclone system 210 in response to these signals. To achieve this, the enhanced cyclone controller 274 includes additional outputs, illustrated by block 280 in Fig. 5. These additional outputs 280 are connected to the isolation valves 224a through h, and a water tank 281 for adding water to the slurry being fed into the pump 40. By adding water to the slurry, the slurry becomes less dense (less viscous), which affects the pressure within each hydrocyclone 12.

The additional processing module 279 can detect when an operating mode in one hydrocyclone (e.g. hydrocyclone 12a) is significantly different to that of the other hydrocyclones, and can shut off that hydrocyclone (e.g. hydrocyclone 12a) by closing its associated isolation valve 224a. The additional processing module 279 may open a closed isolation valve (e.g. 224g) associated with a hydrocyclone that is not currently in use (e.g. hydrocyclone 12g) to balance the pressures in the cluster of hydrocyclones that are operational.

The hydrocyclone system 210 may combine the adjustment settings for each hydrocyclone being operated to generate a master adjustment setting based on the individual adjustment settings. The combination of adjustment settings may be implemented using a conventional weighting algorithm. This master adjustment setting may be transmitted to the pump 40.

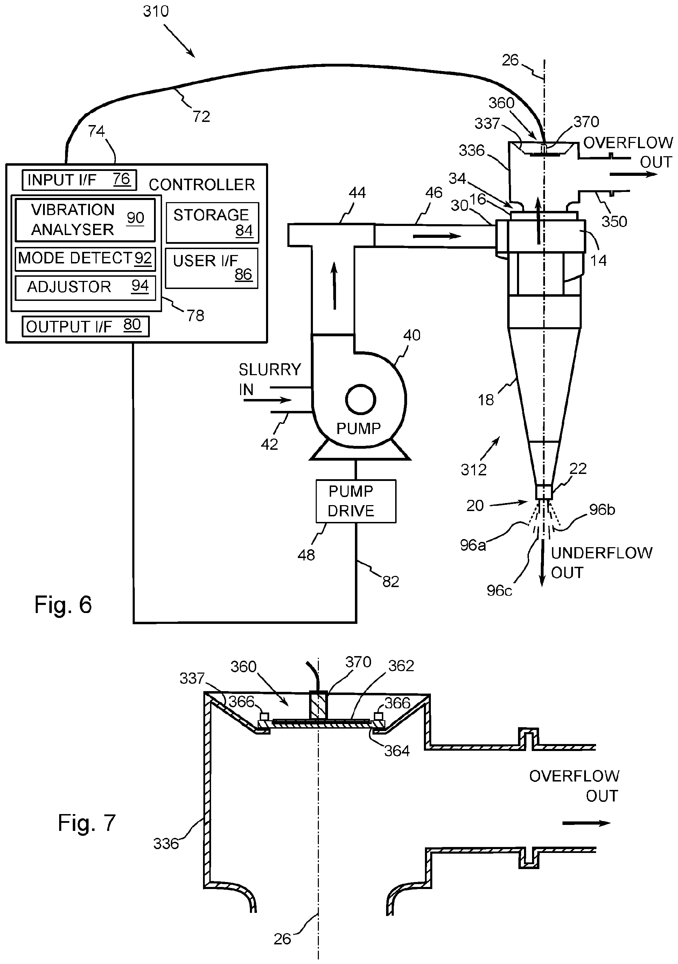

Reference is now made to Fig. 6, which is a schematic view of part of a hydrocyclone system 310 according to a third embodiment of the present invention, and Fig. 7, which is a simplified cross section view of part of the hydrocyclone system 310, showing features thereof in more detail;
The hydrocyclone system 310 is very similar to hydrocyclone system 10, but hydrocyclone 312 includes a conventional air core booster 336, and a sensor assembly 360 is mounted on an upper portion, in this embodiment a top surface 337, of the air core booster 336. A vibration sensor 370 is mounted on a membrane 362 near the centre of the sensor assembly 360 (approximately aligned with the longitudinal axis 26) and measures vibrations in the air core of the hydrocyclone 312. The vibration sensor 370 and membrane 362 are coupled to an annular mount 364 coupled to the top surface 337 by bolts 366. The top surface 337 may be recessed with respect to sidewalls of the air core booster 336, for example, it may have a frusto-conical shape, as shown in Fig. 7. In this embodiment, the start of the overflow pipe 350 is generally perpendicular to the longitudinal axis 26; whereas, for hydrocyclone 12 the start of the overflow pipe 50 is generally parallel to the longitudinal axis 26.

The membrane 362, annular mount 364, bolts 366, and vibration sensor 370 may be very similar or identical to the corresponding features in hydrocyclone system 10.

Hydrocyclones with air core boosters produce improvements in capacity and cyclone efficiency by reducing the total pressure across the hydrocyclone, increasing the volume flow split to the overflow. An air core booster allows the use of a larger apex finder (spigot) for a given bypass of water to the underflow, which produces a more stable, larger diameter air core, increasing capacity and reducing bypass of fines. Air core boosters also reduce the chances of operating the hydrocyclone under roping conditions.

The operation of the hydrocyclone system 310 is the same as that of the hydrocyclone system 10, except that the sensor assembly 360 is mounted at a different location to sensor assembly 60, but both sensors 60, 360 measure the vibrations of the air core in the hydrocyclone 12, 312 and process the vibration measurements in the same way.

The cyclone controller 74, 274 in the hydrocyclone systems 10, 210, 310 described above may provide alerts and recommendations about adjustments that an operator may make to these systems 10, 210, 310 to improve their performance.

The cyclone controller 74, 274 may include a software representation of a mathematical model of a hydrocyclone to calculate the efficiency and metallurgical parameters of an individual hydrocyclone or a cluster of hydrocyclones.

Hydrocyclone system 210 may include a flow meter in a central slurry feed to the hydrocyclone cluster. Additional sensors that may be used to collect measurements from the central slurry feed input include a pressure sensor, a slurry feed density sensor, and sensors to detect the state of each isolation valve 224 (open or closed condition). Some or all of these sensors may be used to create a full autonomous system for controlling the operation of the hydrocyclone system 10, 210, 310.

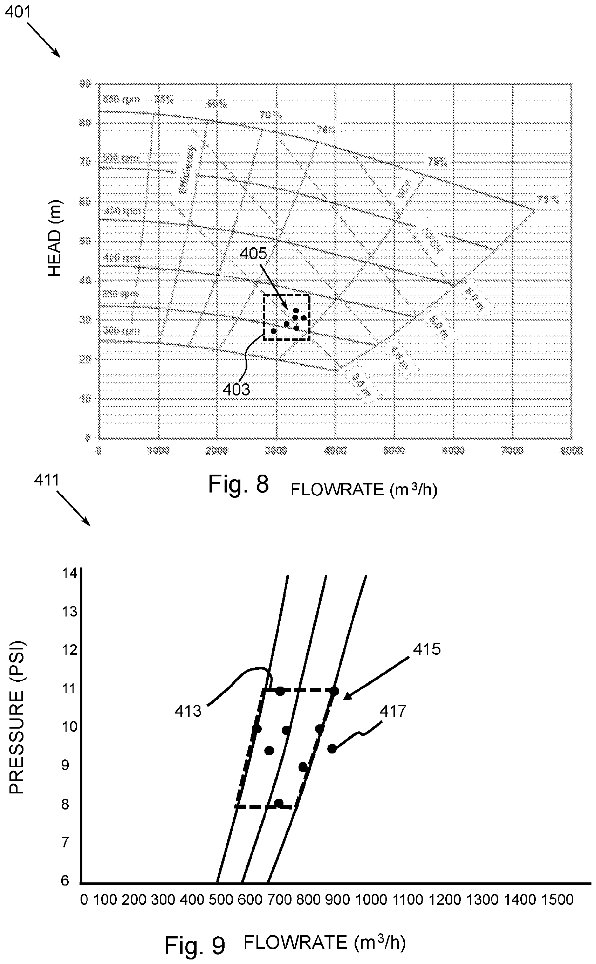

The cyclone controller 74, 274 may control the pump 40 and hydrocyclones 12, 312 in such a way as to ensure they operate in a preferred hydraulic range. Fig. 8 is an example of a pump curve 401 illustrating a safe operating zone 403 in which the hydrocyclone system 10, 310 maintains the pump 40. The points (indicated generally by arrow 405) illustrate the measured flowrate and head at various times, and the cyclone controller 74, 274 uses the various measurements recorded from the sensors described above to adjust the pump flowrate or pressure to the pump to maintain operation in (or return operation to) the preferred operating zone 403. Similarly, Fig. 9 is an example of a hydrocyclone curve 411 illustrating a safe operating zone 413 in which the hydrocyclone system 10, 310 maintains the hydrocyclone 12, 312. The points (indicated generally by arrow 415) illustrate the measured flowrate and pressure (in the cyclone distributor feed) at various times, and the cyclone controller 74, 274 uses the various measurements recorded from the sensors described above to adjust the pump flowrate or pressure to the pump to maintain operation in (or return operation to, for example for out of range point 417) the preferred operating zone 403.

It will now be appreciated that these embodiments have the advantage of being able to operate hydrocyclones at a high efficiency (in a semi-roping or even transitional mode, collectively referred to as "high efficiency modes" or "high efficiency states") because the pressure of the fluid can be changed quickly by adjusting the speed of the pump, which quickly changes the geometry of the air core inside the hydrocyclone. This enables the hydrocyclone to be operated because if roping does occur it can be quickly detected and reversed by reducing the pumping speed.

In the above embodiments a controller is used based on off-the-shelf parts configured with specific parameters to define the upper and lower amplitudes of each mode; but in other embodiments the controller may be based on a conventional PC that is programmed with software (such as a trained deep learning model) to perform vibration analysis, mode detection, and adjustment generation.

In other embodiments, instead of, or in addition to, changing the pump speed, one or more of the following may be changed: (i) the fluid viscosity (for example, by adding more water to reduce the viscosity, or by adding additional particles to increase the viscosity), (ii) a vortex finder diameter at the overflow, (iii) an apex diameter at the underflow, or (iv) the state of an isolation valve (open or closed) on an inlet to a hydrocyclone.

In other embodiments, the amplitude may be measured at a different frequency for some or all of the operating modes.

In other embodiments, each hydrocyclone 12 may be mounted at an oblique angle, in a more horizontal than vertical orientation, depending on the application for which the hydrocyclones 12 are used. In other embodiments, a different motor controller may be used than a variable frequency drive controller.

In other embodiments, a different frequency range may be used (for example, 20Hz to 60Hz, 5Hz to 80Hz, 30Hz to 45Hz, or the like). In other embodiments, the maximum amplitude for each operating mode may be recorded, even if each maximum amplitude for the modes occur at a different frequency.

In other embodiments, the characteristic of the measured vibrations may comprise a different property to an amplitude of the vibrations.

### Reference Numerals

| | | | |
|---|---|---|---|
| 10, 310 | hydrocyclone system | 100 | calibration flowchart |
| 12, 312 | hydrocyclone | 102 | frequency range selection step |
| 14 | upper chamber | 104 | start hydrocyclone system |
| 16 | overflow cap / vortex finder | 106 | detect operating mode |
| 18 | separation chamber | 108 | adjust pump speed for splash mode |
| 20 | underflow outlet | 110 | detect operating mode to confirm splash mode |
| 22 | spigot | 112 | measure amplitudes across frequency range |
| 26 | longitudinal axis | 114 | adjust pump speed for next mode |
| 30 | feed inlet | 116 | confirm desired operating mode |
| 34 | overflow outlet | 118 | measure amplitudes across frequency range |
| 40 | centrifugal pump | 120 | confirm all modes measured |
| 42 | centrifugal pump input hose | 122 | finalise calibration |
| 44 | distributor | | |
| 46 | distributor hose | 140 | optimised operation process |
| 48 | variable frequency drive controller | 142 | start hydrocyclone system |
| 50, 350 | overflow pipe | 144 | retrieve measured parameters |
| 52 | flanged protrusion | 146 | record vibration amplitude |
| 54 | opening | 148 | compare with stored amplitude values |
| 56 | lateral axis | 150 | identify current operating mode |
| 58 | internal passageway | 152 | display current operating mode |
| 60, 360 | sensor assembly | 154 | ascertain if adjustment needed |
| 62, 362 | membrane | 156 | create adjustment value |
| 64, 364 | annular mount | 158 | transmit adjustment value |
| 66, 366 | bolts | | |
| 68 | mounting zone | 210 | hydrocyclone system |
| 70, 370 | vibration sensor | 224 | isolation valves |
| 72 | sensor cable | | |
| 74 | cyclone controller | 274 | enhanced cyclone controller |
| 76 | input interface | 275 | density sensor |
| 78 | processor | 276 | overflow tank |
| 80 | output interface | 277 | density sensor |
| 82 | pump control cable | 278 | underflow tank |
| 84 | non-volatile storage | 279 | additional processing module |
| 86 | user interface | 280 | additional outputs |
| 90 | vibration analysis | 281 | water tank |
| 92 | mode detection | | |
| 94 | adjustment | 336 | air core booster |
| 96a | splash mode | 337 | upper portion (e.g. top surface) |
| 96b | semi-roping mode | | |
| 96c | roping mode | 401 | pump curve |
| | | 403 | safe operating zone |
| | | 405 | pump operating points |
| | | 411 | hydrocyclone curve |
| | | 413 | safe operating zone |
| | | 415 | hydrocyclone operating points |
| | | 417 | out of range point |

## Claims

1. A method (140) of controlling the operation of a hydrocyclone (12, 312) to maintain the hydrocyclone (12, 312) in a semi-roping or transition operational state as it separates a pumped fluid into an overflow stream and an underflow stream, the method comprising:
measuring vibrations of the hydrocyclone at a selected frequency within a predetermined frequency range;
comparing a characteristic of the measured vibrations at the selected frequency (148) with a plurality of values representing transitions to a high efficiency state and a roping state, respectively, of the hydrocyclone to identify a current operational state of the hydrocyclone (150);
generating an adjustment setting (156) to change the identified current operational state to the high efficiency state, where the adjustment setting increases or decreases an operational parameter, such as a pumped fluid parameter.

2. A method according to claim 1, wherein the desired frequency range comprises the range from 1Hz to 50 Hz.

3. A method according to claim 1 or 2, wherein the selected frequency is determined by implementing a calibration process (100) on the hydrocyclone.

4. A method according to claim 3, wherein the calibration process involves forcing the operation of the hydrocyclone between the different states of operation.

5. A method according to any preceding claim, wherein the characteristic of the measured vibrations comprises an amplitude of the vibrations.

6. A method according to any preceding claim, wherein the plurality of values comprises a low value, a medium value, and a high value; wherein any characteristic below the low value represents a first mode of operation, any characteristic at or above the low value but below the medium value represents a second mode of operation, any characteristic at or above the medium value but below the high value represents a third mode of operation and any characteristic at or above the high value represents a fourth mode of operation.

7. A method according to any preceding claim, wherein the adjustment setting comprises a speed adjustment for transmitting to a variable frequency drive controlling a motor powering a pump.

8. A method according to any of claims 1 to 6, wherein the adjustment setting comprises one or more of the following: (i) a change to a fluid viscosity, (ii) a change to a vortex finder diameter, (iii) a change to an apex diameter, or (iv) a change to a state of an isolation valve on an inlet to the hydrocyclone.

9. A method according to any preceding claim, wherein the adjustment setting includes an indication of an amount to increase or decrease a pumped fluid parameter.

10. A method according to any preceding claim, wherein the method further comprises: detecting when the characteristic meets the highest value of the plurality of values and implementing an intervention process in response thereto.

11. A method according to claim 10, wherein the intervention process further comprises stopping the pumped fluid if adjusting the pumped fluid parameter does not cause the characteristic to meet the lower or lowest value.

12. A method of controlling the operation of a hydrocyclone cluster comprising a plurality of hydrocyclones (12a to 12h) fed by a fluid distributor to maintain each hydrocyclone in a semi-roping or transition operational state, the method comprising:
measuring vibrations from each of a plurality of hydrocyclones at a selected frequency in a predetermined frequency range;
for each hydrocyclone, comparing a characteristic of the measured vibrations at the selected frequency (148) with a plurality of values representing transitions to a semi-roping state, a transition state and a roping state of the hydrocyclones to identify a current operational state of each of the hydrocyclones (150);
generating an adjustment setting (156) for each hydrocyclone to change the identified current operational state to, or maintain each hydrocyclone in, either the semi-roping or transition state; and using a weighting algorithm to generate a master adjustment setting based on the individual adjustment settings, where the master adjustment setting increases or decreases a pumped fluid parameter.

13. A hydrocyclone (12, 312) for separating pumped fluid into a plurality of streams, the hydrocyclone (12, 312) comprising:
an inlet (30) for receiving the pumped fluid;
a separation chamber (18) in fluid communication with the inlet (30) and delivering a first fluid stream to an overflow (34), and a second stream to an underflow (20);
a vibration sensor (70, 370) mounted on the hydrocyclone (12, 312); and
a controller (74, 274) operable to
(i) measure vibrations of the hydrocyclone at a selected frequency within a predetermined frequency range;
(ii) compare a characteristic of the measured vibrations at the selected frequency with a plurality of values representing transitions to a semi-roping state, a transition state and a roping state of the hydrocyclone to identify a current operational state of the hydrocyclone; and
(iii) generate an adjustment setting, if needed, to change the identified current operational state to, or maintain each hydrocyclone in, either the semi-roping or transition state, where the adjustment setting increases or decreases a pumped fluid parameter.

14. A hydrocyclone system (10, 310) comprising a plurality of hydrocyclones (12, 312) according to claim 13, where the plurality of adjustment settings created by the hydrocyclones are fed into a weighting algorithm to create a master adjustment setting based on the individual adjustment settings.

15. A hydrocyclone system according to claim 14, further comprising: a density sensor (275) in the overflow of each hydrocyclone or in a common overflow path (276) fed into by each hydrocyclone overflow; and a density sensor (277) in the underflow (278).

## Patentansprüche

1. Verfahren (140) zum Steuern des Betriebs eines Hydrozyklons (12, 312), um den Hydrozyklon (12, 312) in einem Halb-Abtrennungs- oder Übergangs-Betriebszustand zu halten, wenn er ein Pumpfluid in einen Überlaufstrom und einen Unterlaufstrom trennt, das Verfahren umfassend:
Messen von Schwingungen des Hydrozyklons bei einer ausgewählten Frequenz innerhalb eines vorbestimmten Frequenzbereichs;
Vergleichen einer Charakteristik der gemessenen Schwingungen bei der ausgewählten Frequenz (148) mit einer Vielzahl von Werten, die Übergänge zu einem Hocheffizienzzustand beziehungsweise einem Abtrennungszustand des Hydrozyklons darstellen, um einen aktuellen Betriebszustand des Hydrozyklons (150) zu identifizieren;
Erzeugen einer Anpassungseinstellung (156), um den identifizierten aktuellen Betriebszustand in den Hocheffizienzzustand zu ändern, wobei die Anpassungseinstellung einen Betriebsparameter, wie beispielsweise einen Pumpfluidparameter, erhöht oder verringert.

2. Verfahren nach Anspruch 1, wobei der gewünschte Frequenzbereich den Bereich von 1 Hz bis 50 Hz umfasst.

3. Verfahren nach Anspruch 1 oder 2, wobei die ausgewählte Frequenz durch Implementieren eines Kalibrierungsprozesses (100) an dem Hydrozyklon bestimmt wird.

4. Verfahren nach Anspruch 3, wobei der Kalibrierungsprozess das zwangsweise Festlegen des Betriebs des Hydrozyklons zwischen den verschiedenen Betriebszuständen beinhaltet.

5. Verfahren nach einem der vorhergehenden Ansprüche, wobei die Charakteristik der gemessenen Schwingungen eine Amplitude der Schwingungen umfasst.

6. Verfahren nach einem der vorhergehenden Ansprüche, wobei die Vielzahl von Werten einen niedrigen Wert, einen mittleren Wert und einen hohen Wert umfasst; wobei jede Charakteristik unterhalb des niedrigen Wertes einen ersten Betriebsmodus darstellt, jede Charakteristik bei oder oberhalb des niedrigen Wertes jedoch unterhalb des mittleren Wertes einen zweiten Betriebsmodus darstellt, jede Charakteristik bei oder oberhalb des mittleren Wertes jedoch unterhalb des hohen Werts einen dritten Betriebsmodus darstellt und jede Charakteristik bei oder oberhalb des hohen Werts einen vierten Betriebsmodus darstellt.

7. Verfahren nach einem der vorhergehenden Ansprüche, wobei die Anpassungseinstellung eine Geschwindigkeitsanpassung zum Übertragen auf einen Frequenzumrichter umfasst, der einen eine Pumpe antreibenden Motor steuert.

8. Verfahren nach einem der Ansprüche 1 bis 6, wobei die Anpassungseinstellung eines oder mehrere der folgenden umfasst: (i) eine Änderung einer Fluidviskosität, (ii) eine Änderung eines Tauchrohrdurchmessers, (iii) eine Änderung eines Scheiteldurchmessers oder (iv) eine Änderung eines Zustands eines Absperrventils an einem Einlass des Hydrozyklons.

9. Verfahren nach einem der vorhergehenden Ansprüche, wobei die Anpassungseinstellung eine Angabe eines Maßes, in dem ein Pumpfluidparameter zu erhöhen oder zu verringern ist, beinhaltet.

10. Verfahren nach einem der vorhergehenden Ansprüche, wobei das Verfahren ferner Folgendes umfasst: Erfassen, wann die Charakteristik den höchsten Wert der Vielzahl von Werten erfüllt, und Implementieren eines Interventionsprozesses in Reaktion darauf.

11. Verfahren nach Anspruch 10, wobei der Interventionsprozess ferner ein Anhalten des Pumpfluids umfasst, wenn das Anpassen des Pumpfluidparameters nicht bewirkt, dass die Charakteristik den niedrigeren oder den niedrigsten Wert erfüllt.

12. Verfahren zum Steuern des Betriebs eines Hydrozyklon-Clusters, der eine Vielzahl von Hydrozyklonen (12a bis 12h) umfasst, die von einem Fluidverteiler gespeist werden, um jeden Hydrozyklon in einem Halb-Abtrennungs- oder Übergangs-Betriebszustand zu halten, das Verfahren umfassend:
Messen von Schwingungen von jedem einer Vielzahl von Hydrozyklonen bei einer ausgewählten Frequenz innerhalb eines vorbestimmten Frequenzbereichs;
für jeden Hydrozyklon, Vergleichen einer Charakteristik der gemessenen Schwingungen bei der ausgewählten Frequenz (148) mit einer Vielzahl von Werten, die Übergänge zu einem Halb-Abtrennungszustand, einem Übergangszustand und einem Abtrennungszustand der Hydrozyklone darstellen, um einen aktuellen Betriebszustand jedes der Hydrozyklone (150) zu identifizieren;
Erzeugen einer Anpassungseinstellung (156) für jeden Hydrozyklon, um den identifizierten aktuellen Betriebszustand jedes Hydrozyklons entweder in den Halb-Abtrennungs- oder den Übergangszustand zu ändern oder in diesem beizubehalten; und Verwenden eines Gewichtungsalgorithmus, um eine Master-Anpassungseinstellung basierend auf den individuellen Anpassungseinstellungen zu erzeugen, wobei die Master-Anpassungseinstellung einen Pumpfluidparameter erhöht oder verringert.

13. Hydrozyklon (12, 312) zum Trennen von Pumpfluid in eine Vielzahl von Strömen, der Hydrozyklon (12, 312) umfassend:
einen Einlass (30) zum Aufnehmen des Pumpfluids;
eine Trennkammer (18), die in Fluidverbindung mit dem Einlass (30) steht und einen ersten Fluidstrom an einen Überlauf (34) und einen zweiten Strom an einen Unterlauf (20) abgibt;
einen Schwingungssensor (70, 370), der an dem Hydrozyklon (12, 312) angebracht ist; und
eine Steuerung (74, 274), die betreibbar ist zum
(i) Messen von Schwingungen des Hydrozyklons bei einer ausgewählten Frequenz innerhalb eines vorbestimmten Frequenzbereichs;
(ii) Vergleichen einer Charakteristik der gemessenen Schwingungen bei der ausgewählten Frequenz mit einer Vielzahl von Werten, die Übergänge zu einem Halb-Abtrennungszustand, einem Übergangszustand und einem Abtrennungszustand des Hydrozyklons darstellen, um einen aktuellen Betriebszustand des Hydrozyklons zu identifizieren; und
(iii) Erzeugen einer Anpassungseinstellung, falls erforderlich, um den identifizierten aktuellen Betriebszustand jedes Hydrozyklons entweder in den Halb-Abtrennungs- oder den Übergangszustand zu ändern oder in diesem beizubehalten, wobei die Anpassungseinstellung einen Pumpfluidparameter erhöht oder verringert.

14. Hydrozyklonsystem (10, 310), umfassend eine Vielzahl von Hydrozyklonen (12, 312), nach Anspruch 13, wobei die Vielzahl von Anpassungseinstellungen, die durch die Hydrozyklone erzeugt werden, in einen Gewichtungsalgorithmus eingespeist werden, um eine Master-Anpassungseinstellung basierend auf den individuellen Anpassungseinstellungen zu erzeugen.

15. Hydrozyklonsystem nach Anspruch 14, ferner umfassend: einen Dichtesensor (275) in dem Überlauf jedes Hydrozyklons oder in einem gemeinsamen Überlaufweg (276), der von jedem Hydrozyklonüberlauf eingespeist wird; und einen Dichtesensor (277) in dem Unterlauf (278).

## Revendications

1. Procédé (140) de commande du fonctionnement d'un hydrocyclone (12, 312) pour maintenir l'hydrocyclone (12, 312) dans un état de fonctionnement de semi-roping ou de transition lorsqu'il sépare un fluide pompé en un courant de surverse et un courant de sous-verse, le procédé comprenant :
la mesure des vibrations de l'hydrocyclone à une fréquence sélectionnée dans une plage de fréquences prédéterminée ;
la comparaison d'une caractéristique des vibrations mesurées à la fréquence sélectionnée (148) avec une pluralité de valeurs représentant des transitions vers, respectivement, un état de haute efficacité et un état de décharge en boudin (roping) de l'hydrocyclone pour identifier un état fonctionnel actuel de l'hydrocyclone (150) ;
la génération d'une configuration de réglage (156) pour passer de l'état fonctionnel actuel identifié à l'état de haute efficacité, où la configuration de réglage augmente ou diminue un paramètre fonctionnel, tel qu'un paramètre de fluide pompé.

2. Procédé selon la revendication 1, dans lequel la plage de fréquences souhaitée comprend la plage de 1 Hz à 50 Hz.

3. Procédé selon la revendication 1 ou 2, dans lequel la fréquence sélectionnée est déterminée en mettant en œuvre un processus d'étalonnage (100) sur l'hydrocyclone.

4. Procédé selon la revendication 3, dans lequel le processus d'étalonnage implique de forcer le fonctionnement de l'hydrocyclone entre les différents états de fonctionnement.

5. Procédé selon l'une quelconque des revendications précédentes, dans lequel la caractéristique des vibrations mesurées comprend une amplitude des vibrations.

6. Procédé selon l'une quelconque des revendications précédentes, dans lequel la pluralité de valeurs comprend une valeur basse, une valeur moyenne, et une valeur haute ; dans lequel toute caractéristique inférieure à la valeur basse représente un premier mode de fonctionnement, toute caractéristique supérieure ou égale à la valeur basse mais inférieure à la valeur moyenne représente un deuxième mode de fonctionnement, toute caractéristique supérieure ou égale à la valeur moyenne mais inférieure à la valeur haute représente un troisième mode de fonctionnement et toute caractéristique supérieure ou égale à la valeur haute représente un quatrième mode de fonctionnement.

7. Procédé selon l'une quelconque des revendications précédentes, dans lequel la configuration de réglage comprend un réglage de vitesse pour transmettre à un entraînement à fréquence variable qui commande un moteur alimentant une pompe.

8. Procédé selon l'une quelconque des revendications 1 à 6, dans lequel la configuration de réglage comprend un ou plusieurs parmi les suivants : (i) un changement de viscosité du fluide, (ii) un changement de
diamètre du diaphragme, (iii) un changement de diamètre de sommet, ou (iv) un changement d'état d'une vanne d'isolement sur une entrée de l'hydrocyclone.

9. Procédé selon l'une quelconque des revendications précédentes, dans lequel la configuration de réglage comprend une indication d'une quantité pour augmenter ou diminuer un paramètre de fluide pompé.

10. Procédé selon l'une quelconque des revendications précédentes, dans lequel le procédé comprend en outre : la détection du moment auquel la caractéristique atteint la valeur la plus haute de la pluralité de valeurs et la mise en œuvre d'un processus d'intervention en réponse à celle-ci.

11. Procédé selon la revendication 10, dans lequel le processus d'intervention comprend en outre l'arrêt du fluide pompé si le réglage du paramètre de fluide pompé n'amène pas la caractéristique à atteindre la valeur basse ou la valeur la plus basse.

12. Procédé de commande du fonctionnement d'un groupe d'hydrocyclones comprenant une pluralité d'hydrocyclones (12a à 12h) alimentés par un distributeur de fluide pour maintenir chaque hydrocyclone dans un état de fonctionnement de semi-roping ou de transition, le procédé comprenant :
la mesure de vibrations à partir de chacun d'une pluralité d'hydrocyclones à une fréquence sélectionnée dans une plage de fréquences prédéterminée ;
pour chaque hydrocyclone, la comparaison d'une caractéristique des vibrations mesurées à la fréquence sélectionnée (148) avec une pluralité de valeurs représentant des transitions vers un état de semi-roping, un état de transition et un état de roping des hydrocyclones pour identifier un état fonctionnel actuel de chacun des hydrocyclones (150) ;
la génération d'une configuration de réglage (156) pour chaque hydrocyclone afin de passer de l'état fonctionnel actuel identifié à, ou de maintenir chaque hydrocyclone dans, soit l'état de semi-roping, soit l'état de transition ; et l'utilisation d'un algorithme de pondération afin de générer une configuration de réglage maître sur la base des configurations de réglage individuelles, où la configuration de réglage maître augmente ou diminue un paramètre de fluide pompé.

13. Hydrocyclone (12, 312) pour la séparation d'un fluide pompé en une pluralité de courants, l'hydrocyclone (12, 312) comprenant :
une entrée (30) pour la réception du fluide pompé ;
une chambre de séparation (18) en communication fluidique avec l'entrée (30) et délivrant un premier courant de fluide à une surverse (34), et un deuxième courant à une sous-verse (20) ;
un capteur de vibrations (70, 370) monté sur l'hydrocyclone (12, 312) ; et
un dispositif de commande (74, 274) pouvant fonctionner pour
(i) mesurer les vibrations de l'hydrocyclone à une fréquence sélectionnée dans une plage de fréquences prédéterminée ;
(ii) comparer une caractéristique des vibrations mesurées à la fréquence sélectionnée avec une pluralité de valeurs représentant des transitions vers un état de semi-roping, un état de transition et un état de roping de l'hydrocyclone pour identifier un état fonctionnel actuel de l'hydrocyclone ; et
(iii) générer une configuration de réglage, si nécessaire, afin de passer de l'état fonctionnel actuel identifié à, ou de maintenir chaque hydrocyclone dans, soit l'état de semi-roping, soit l'état de transition, où la configuration de réglage augmente ou diminue un paramètre de fluide pompé.

14. Système d'hydrocyclones (10, 310) comprenant une pluralité d'hydrocyclones (12, 312) selon la revendication 13, dans lequel la pluralité de configurations de réglage créées par les hydrocyclones sont alimentées dans un algorithme de pondération afin de créer une configuration de réglage maître sur la base des configurations de réglage individuelles.

15. Système d'hydrocyclones selon la revendication 14, comprenant en outre : un capteur de densité (275) dans la surverse de chaque hydrocyclone ou dans un trajet de surverse commun (276) alimenté par chaque surverse d'hydrocyclone ; et un capteur de densité (277) dans la sous-verse (278).
